# EUROPÄISCHE PATENTSCHRIFT

(11) **EP 1 371 890 B1**
(45) Veröffentlichungstag und Bekanntmachung des Hinweises auf die Patenterteilung: **20.09.2006**
(21) Anmeldenummer: 03013145.2
(22) Anmeldetag: 11.06.2003
(51) Int. Cl.: F16L 11/10, F16L 11/04, F16L 11/12, C21B 5/00

(54) **Rohrleitungssystem zur Brennstoffeinblasung in Hochöfen oder dergleichen**
Pipeline system for the injection of fuels into blast furnaces or the like
Système de conduits pour l'injection de combustibles dans hauts fourneaux ou analogues

(30) Priorität: 12.06.2002 DE 20209161 U
(43) Veröffentlichungstag der Anmeldung: 17.12.2003
(73) Patentinhaber: Georg Springmann Industrie- und Bergbautechnik GMBH, 45472 Mülheim an der Ruhr (DE)
(72) Erfinder: Springmann, Georg, 45472 Mülheim/Ruhr (DE); Warmbier, Dieter, 47441 Moers (DE); Hasselbrink, Dirk, 47059 Duisburg (DE)
(74) Vertreter: Viering, Jentschura & Partner

(56) Entgegenhaltungen:
- EP-A- 0 622 465
- DE-A- 4 310 159
- DE-A- 4 315 175
- DE-A- 4 446 001
- DE-B- 1 231 073
- DE-C- 4 041 936
- US-A- 5 544 868

## Beschreibung

Die Erfindung betrifft ein Rohrleitungssystem zur Brennstoffeinblasung in Hochöfen oder dergleichen.

Zur Herstellung von Roheisen in einem Hochofen ist es üblich, den Koksverbrauch durch Einblasung von weiteren kohlenstofftragenden, als Ersatzreduktionsmittel dienenden Brennstoffen wie beispielsweise Erdgas, Kokereigasen, Flüssiggas, Feinkohle oder Heizöl zu reduzieren.

Die hierbei in der Praxis verwendeten Rohrleitungssysteme umfassen in der Regel Gummischlauchleitungen, die z.B. mit einer geeigneten Seele, beispielsweise einer EPDM-Seele, versehen und z.B. mittels sogenannter Cam-Lock-Kupplungselemente an den Brennstoffanschluss des Hochofens sowie an eine oder mehrere Brennstoffzufuhrleitungen angeschlossen sind. Ein Beispiel dafür ist im Dokument US 5,544,868 offenbart.

Die bekannten Rohrleitungssysteme sind beim Einsatz zur Brennstoffeinblasung in Hochöfen jedoch in mehrfacher Hinsicht nachteilig:
- Infolge der verwendeten Dichtelemente kann bei den mit hoher Temperatur und hohem Druck eingeblasenen Erdgasen ein Verschmoren der Dichtungselemente und damit eine Undichtigkeit des Rohrleitungssystems auftreten;
- In der Schlauchleitung selbst besteht insbesondere beim Einsatz zur Erdgaseinblasung die Gefahr von Schlauchbrüchen;
- Die Gefahr von Verschmorungen der Dichtungselemente und und/oder von Schlauchbrüchen wird durch Rückströmungen heißer Gase, die bei einer Verpuffung auftreten können, noch erhöht.

Aufgabe der vorliegenden Erfindung ist es daher, ein Rohrleitungssystem zur Brennstoffeinblasung in Hochöfen oder dergleichen zu schaffen, welches eine verbesserte Temperatur- und Druckfestigkeit aufweist.

Diese Aufgabe wird gemäß den Merkmalen des unabhängigen Anspruchs 1 gelöst.

Hierzu weist ein Rohrleitungssystem zur Brennstoffeinblasung in Hochöfen oder dergleichen eine Brennstoffschlauchleitung und an deren Endabschnitten vorgesehene Kupplungselemente zum Anschluß der Brennstoffschlauchleitung an einen hochofenseitigen Brennstoffanschluß und an wenigstens eine Brennstoffzufuhr auf, wobei die Brennstoffschlauchleitung eine Seele aus erdgasbeständigem Material aufweist und über ihre gesamte Länge mit einem umfangsseitigen Sicherheitsgeflecht versehen ist, wobei die Kupplungselemente als drucksichere Schnellkupplungseinrichtungen ausgebildet sind, und wobei auf der dem hochofenseitigen Brennstoffanschluß zugewandten Seite der Brennstoffschlauchleitung ein metallisch dichtendes Rückschlagelement zum Vermeiden eines Gasrückstroms aus dem Hochofen vorgesehen ist.

Dadurch, daß auf der dem hochofenseitigen Brennstoffanschluß zugewandten Seite der Brennstoffschlauchleitung ein metallisch dichtendes Rückschlagelement vorgesehen ist, wird ein Gasrückstrom aus dem Hochofen infolge einer im Hochofen auftretenden Verpuffung in den Bereich der Brennstoffschlauchleitungen sowie der daran angeordneten Armaturen wirksam verhindert. Da das Rückschlagelement metallisch dichtend ist, kann kein Verschmoren, Aufschmelzen oder Nachvulkanisieren von Elastomerteilen auftreten, so dass die Dichtwirkung des Rückschlagelements auch bei Erdgaseinblasung bei hohen Temperaturen sowie bei einer im Hochofen auftretenden Verpuffung erhalten bleibt.

Weitere, etwa in den Schnellkupplungseinrichtungen vorgesehene Dichtelemente aus Gummi oder Elastomeren werden bedingt durch die Vorschaltung des metallisch dichtenden Rückschlagelements wirksam vor einem Verschmoren, Aufschmelzen oder Nachvulkanisieren geschützt, so dass die Temperaturfestigkeit des Rohrleitungssystems wesentlich erhöht wird.

Infolge der Seele aus erdgasbeständigem Material und des umfangsseitigen Sicherheitsgeflechts wird eine optimale Temperaturbeständigkeit des erfindungsgemäßen Rohrleitungssystems erreicht, wobei gleichzeitig infolge der Verwendung drucksicherer Schnellkupplungseinrichtungen, wie beispielsweise WE-ER-Kupplungen der Fa. Weinhold, eine erhöhte Druckfestigkeit bei zudem einfacher und schneller Handhabung erzielt wird, da die verwendeten Schnellkupplungseinrichtungen gegenüber den bekannten Systemen verwendeten Cam-Lock-Kupplungselementen wesentlich höheren Drücken standhalten können.

Das umfangsseitige Sicherheitsgeflecht ist vorzugsweise aus Edelstahl hergestellt, wobei eine optimale Schlauchbruchsicherung erreicht wird, wenn jedes Kupplungselement einen verlängerten Stutzen zum Fixieren und Aufschweißen des Sicherheitsgeflechts aufweist.

Gemäß einer weiteren bevorzugten Ausführungsform ist jedem Kupplungselement wenigstens ein Kugelhahn nachgeschaltet, so daß die Brennstoffzufuhr über das Rohrleitungssystem entsprechend den jeweiligen Anforderungen flexibel eingestellt werden kann.

Weitere Ausgestaltungen der Erfindung sind der Beschreibung und den Unteransprüchen zu entnehmen.

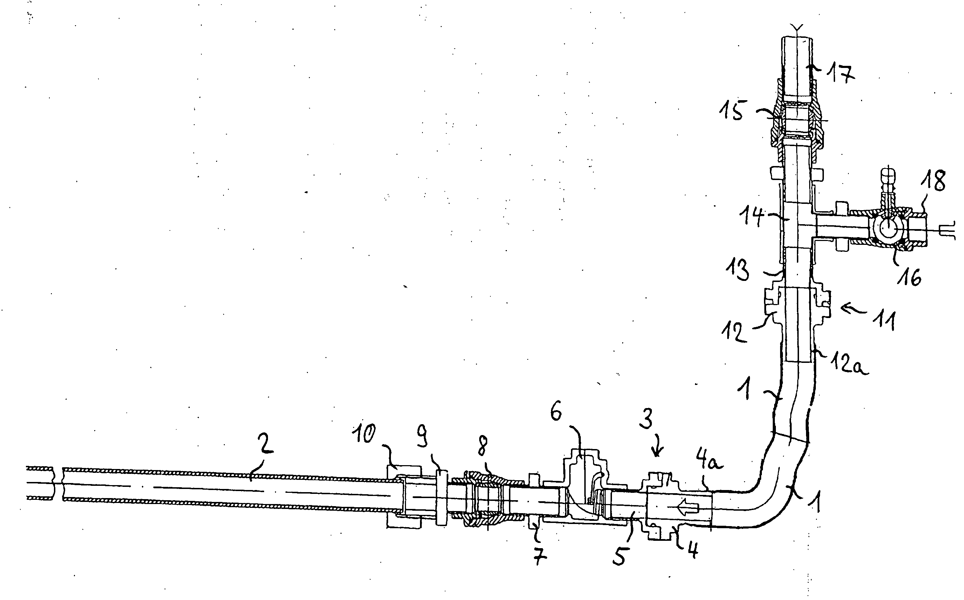

Die Erfindung wird nachstehend anhand eines in der beigefügten Abbildung dargestellten Ausführungsbeispiels näher erläutert.

Gemäß der einzigen Figur umfasst ein erfindungsgemäßes Rohrleitungssystem eine Brennstoffschlauchleitung 1 zum Anschluß von einer oder mehrerer (im dargestellten Ausführungsbeispiel zwei) Brennstoffzufuhrleitungen an einen Brennstoffanschluß einer (nicht dargestellten) Hochofenanlage. Die Brennstoffschlauchleitung 1 weist eine erdgasbeständige Seele auf und ist über ihre gesamte Länge mit einem als Schlauchbruchsicherung dienenden (nicht dargestellten) Sicherheitsgeflecht, vorzugsweise aus Edelstahl, versehen.

An dem dem hochofenseitigen Brennstoffanschluß 2 zugewandten Endabschnitt der Brennstoffschlauchleitung 1 ist eine erste Schnellkupplungseinrichtung 3 vorgesehen, welche eine mit der Brennstoffschlauchleitung 1 fest verbundene Vaterteilkupplung 4 und eine in diese einkuppelbare Mutterteilkupplung 5 aufweist und als drucksichere Kupplung ausgebildet ist, um ein möglichst sicheres Eindichten des Brennstoffanschlusses 2 in die Brennstoffschlauchleitung 1 zu erreichen. Die Vaterteilkupplung 4 weist auf der der Brennstoffschlauchleitung 1 zugewandten Seite einen verlängerten Stutzen 4a zum Aufbringen des Sicherheitsgeflechts auf. Hierbei wird vorzugsweise der entsprechende Endabschnitt des Sicherheitsgeflechts auf dem verlängerten Stutzen 4a der Vaterteilkupplung 4 mittels Hilfshülsen, vorzugsweise aus Edelstahl, fixiert und anschließend verschweißt.

Die Mutterteilkupplung 5 ist auf der dem Brennstoffanschluss 2 zugewandten Seite an ein eine Rückschlagklappe aufweisendes, metallisch dichtendes Rückschlagelement 6 angekuppelt, welches verhindert, daß heiße Gase, die bei einer Verpuffung im Hochofen infolge der Erdgaseinblasung über das Rohrleitungssystem erzeugt werden, in die Brennstoffschlauchleitung 1 zurückströmen können. Infolge der Ausbildung des Rückschlagelements 6 als allein metallisch dichtendes Rückschlagelement ohne Gummi- oder Elastomerdichtungselemente ist auch bei Rückstrom heißer Gase infolge Verpuffung ein sicheres Abdichten des Bereichs der Brennstoffschlauchleitung 1 und der daran angeordneten Armaturen durch das Rückschlagelement 6 gewährleistet. Insbesondere wird auch bei einer im Hochofen auftretenden Verpuffung ein Aufschmelzen, Verschmoren oder Nachvulkanisieren von Elastomerteilen im Bereich der verwendeten Schnellkupplungseinrichtungen verhindert.

Das Rückschlagelement 6 ist wiederum in Richtung zum Brennstoffanschluss 2 mittels eines Einschraubelementes 7, gemäß dem dargestellten Ausführungsbeispiel einer Sechskanteinschraubverschraubung, an einen Muffenkugelhahn 8, gemäß dem dargestellten Ausführungsbeispiel einen 2-Wege-Kugelhahn mit vollem Durchgang, angeschlossen. Der Muffenkugelhahn 8 ist mittels eines weiteren Einschraubelements 9 sowie einer Überwurfmutter 10 an den Brennstoffanschluss 2 angeschlossen.

Auf der dem Brennstoffanschluss 2 abgewandten Seite der Brennstoffschlauchleitung 1 ist eine weitere Schnellkupplungseinrichtung 11 angebracht, welche eine mit der Brennstoffschlauchleitung 1 fest verbundene Vaterteilkupplung 12 und eine in diese einkuppelbare Mutterteilkupplung 13 aufweist. Die Vaterteilkupplung 12 weist, ebenso wie die Vaterteilkupplung 4, auf der der Brennstoffschlauchleitung 1 zugewandten Seite einen verlängerten Stutzen 12a zum Fixieren des Sicherheitsgeflechts und anschließendem Verschweißen auf.

An die Mutterteilkupplung 13 ist auf der der Brennstoffschlauchleitung 1 abgewandten Seite ein T-Stück 14 angeschlossen, dessen beide verbleibende Anschlüsse unter Zwischenschaltung je eines weiteren Muffenkugelhahns 15 bzw. 16 an zwei Brennstoffzufuhrleitungen 17 und 18 angeschlossen ist, so dass eine Brennstoffzufuhr entsprechend den jeweiligen Anforderungen über eine der Brennstoffzufuhrleitungen 17, 18 oder über beide Brennstoffzufuhrleitungen 17 und 18 erfolgen kann.

Zusammenfassend wird bei dem erfindungsgemäßen Rohrleitungssystem bedingt durch die Vorschaltung des metallisch dichtenden Rückschlagelements 6 ein Eintreten heißer Gase infolge Verpuffung in den Bereich der Brennstoffschlauchleitung 1 und der daran vorgesehenen Armaturen wirksam verhindert, wobei insbesondere an den Schnellkupplungseinrichtungen 3 und 11 vorgesehene Dichtungselemente aus Gummi oder Elastomer wirksam vor einem Aufschmelzen, Verschmoren oder Nachvulkanisieren geschützt sind. Ferner wird infolge der Seele der Brennstoffschlauchleitung 1 aus erdgasbeständigem Material und des umfangsseitigen Sicherheitsgeflechts eine optimale Temperaturbeständigkeit des erfindungsgemäßen Rohrleitungssystems erreicht, wobei gleichzeitig infolge der Verwendung drucksicherer Schnellkupplungseinrichtungen 3, 11 eine erhöhte Druckfestigkeit bei zudem einfacher und schneller Handhabung erzielt wird. Insgesamt weist das erfindungsgemäße Rohrleitungssystem somit eine verbesserte Temperatur- und Druckfestigkeit auf.

### Bezugszeichenliste

- 1: Brennstoffschlauchleitung
- 2: Brennstoffanschluss
- 3: erste Schnellkupplungseinrichtung
- 4: Vaterteilkupplung
- 4a: Stutzen
- 5: Mutterteilkupplung
- 6: Rückschlagelement
- 7: Einschraubelement
- 8: Muffenkugelhahn
- 9: Einschraubelement
- 10: Überwurfmutter
- 11: zweite Schnellkupplungseinrichtung
- 12: Vaterteilkupplung
- 12a: Stutzen
- 13: Mutterteilkupplung
- 14: T-Stück
- 15: Muffenkugelhahn
- 16: Muffenkugelhahn
- 17: erste Brennstoffzufuhrleitung
- 18: zweite Brennstoffzufuhrleitung

## Patentansprüche

1. Rohrleitungssystem zur Brennstoffeinblasung in Hochöfen oder dergleichen, mit einer Brennstoffschlauchleitung (1) und an deren Endabschnitten vorgesehenen Kupplungselementen (3, 11) zum Anschluß der Brennstoffschlauchleitung (1) an einen hochofenseitigen Brennstoffanschluß (2) und an wenigstens eine Brennstoffzufuhr (15, 16), **dadurch gekennzeichnet, dass** die Brennstoffschlauchleitung (2) eine Seele aus erdgasbeständigem Material aufweist und über ihre gesamte Länge mit einem umfangsseitigen Sicherheitsgeflecht aus Edelstahl versehen ist, die Kupplungselemente (3, 11) als drucksichere Schnellkupplungseinrichtungen ausgebildet sind und auf der dem hochofenseitigen Brennstoffanschluß (2) zugewandten Seite der Brennstoffschlauchleitung (1) ein metallisch dichtendes Rückschlagelement (6) zum Vermeiden eines Gasrückstroms aus dem Hochofen vorgesehen ist.

2. Rohrleitungssystem nach Anspruch 1, **dadurch gekennzeichnet, dass** jedes Kupplungselement (3, 11) einen verlängerten Stutzen (4a, 12a) zum Fixieren und Aufschweißen des Sicherheitsgeflechts aufweist.

3. Rohrleitungssystem nach einem der Ansprüche 1 oder 2, **dadurch gekennzeichnet, dass** jedem Kupplungselement (3, 11) wenigstens ein Kugelhahn (8, 15, 16) nachgeschaltet ist.

## Claims

1. Pipeline system for the injection of fuel into blast furnaces or the like, having a fuel pipeline (1) and coupling elements (3, 11) provided at the ends thereof for connecting the fuel pipeline (1) to a connector (2) positioned at the blast furnace and to at least one fuel supply line (15, 16), **characterized in that** said fuel pipeline (2) has an inner tube made of a material being resistant to natural gas and is provided, over its whole length, with a circumferential safety network, said coupling elements (3, 11) are configured as pressure-sealed quick couplings and a backstroke element (6) being metallically sealing is provided at the connector's (2) side on the blast furnace side of the fuel pipeline (1) for avoiding a backflow of gas from the blast furnace.

2. Pipeline system according to claim 1 **characterized in that** each coupling element (3, 11) has an elongated stub (4a, 12a) for fixing and welding of the safety network.

3. Pipeline system according to claim 1 or 2, **characterized in that** at least one ball valve (8, 15, 16) is provided downstream to each coupling element (3, 11).

## Revendications

1. Système de conduites pour l'injection de combustible dans des hauts fourneaux ou analogues, avec une conduite flexible de combustible (1) et des éléments de raccordements (3, 11) prévus au niveau de ses sections d'extrémité et destinés à raccorder la conduite flexible de combustible (1) à un raccord de combustible (2) côté haut fourneau et á au moins une arrivée de combustible (15, 16), **caractérisé en ce que** la conduite flexible de combustible (2) présente une âme réalisée dans un matériau imperméable au gaz naturel et pourvue, sur toute sa longueur, d'un treillis de sécurité périphérique en acier fin, les éléments de raccordement (3, 11) sont conçus sous la forme d'installations à raccord rapide résistant à la pression, et un élément de retenue (6) métallique étanche destiné à éviter un reflux gazeux en provenance du haut fourneau est prévu sur le côté de la conduite flexible de combustible (1) tourné vers le raccord de combustible (2) côté haut fourneau.

2. Système de conduites selon la revendication 1, **caractérisé en ce que** chaque élément de raccordement (3, 11) présente un manchon allongé (4a, 12a) pour la fixation et la soudure du treillis de sécurité.

3. Système de conduites selon l'une quelconque des revendications 1 ou 2, **caractérisé en ce qu'**au moins un robinet à boisseau sphérique (8, 15, 16) est connecté en aval à chaque élément de raccordement (3, 11).
